(19) Europäisches Patentamt
European Patent Office
Office européen des brevets

(11) **EP 3 096 463 A1**

(12) **EUROPEAN PATENT APPLICATION**

(43) Date of publication:
**23.11.2016 Bulletin 2016/47**

(51) Int Cl.:
*H04B 3/32* (2006.01)     *H04L 12/28* (2006.01)
*H04M 11/06* (2006.01)

(21) Application number: **15305764.1**

(22) Date of filing: **21.05.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **ALCATEL LUCENT**
**92100 Boulogne-Billancourt (FR)**

(72) Inventors:
• **WAHIBI, Issam**
**2018 Antwerpen (BE)**

• **NUZMAN, Carl**
**Murray Hill, NJ New Jersey 07974-0636 (US)**
• **DROOGHAAG, Benoît**
**6041 Gosselies (BE)**

(74) Representative: **ALU Antw Patent Attorneys
Intellectual Property and Standards
Copernicuslaan 50
2018 Antwerp (BE)**

Remarks:
Amended claims in accordance with Rule 137(2)
EPC.

(54) **METHOD AND DEVICE FOR DETERMINING A CORRECTIVE OPERATION FOR A DIGITAL SUBSCRIBER LINE**

(57)     Embodiments relate to a method for determining a corrective operation for a monitored Digital Subscriber Line in a first vectoring group (3), executed by a monitoring device (7), comprising:
- receiving (S1; T1; U1) measurement data representative of successive received signal qualities of the monitored Digital Subscriber Line at successive times, and of successive transmission activities of other Digital Subscriber Lines, wherein said other Digital Subscriber Lines include at least one first Digital Subscriber Line in said first vectoring group (3) and at least one second Digital Subscriber Line in a second vectoring group (3),
- determining (S2, S3, S4, S5; T2, T3; U2, U3, U4) a corrective operation for the monitored Digital Subscriber Line in function of changes in said received signal qualities between times wherein the transmission activity of at least one of said other Digital Subscriber Lines changes.

FIG. 1

## Description

FIELD OF THE INVENTION

The present invention relates to the field of telecommunications. In particular, the present invention relates to a method and a device for determining a corrective operation for a Digital Subscriber Line.

BACKGROUND

Crosstalk resulting from interference between different lines is a major source of channel impairments in wired communication systems, such as Digital Subscriber Line (DSL) systems. ITU-T Recommendation G.993.5 entitled "Self-FEXT Cancellation (Vectoring) for Use with VDSL2 Transceivers" describes vectoring, which is a crosstalk cancellation mechanism for DSL lines. Crosstalk induced by disturbing DSL lines into a victim DSL line is cancelled by adding an anti-signal to the victim DSL line that compensates for the crosstalk noise from the disturbing DSL lines. Vectoring can be done for plural disturbing DSL lines enabling to suppress simultaneously the crosstalk from all these disturbing DSL lines within the victim DSL line.

Vectoring relies on grouping communication lines in a so called vectoring group. The choice of the vectoring group, i.e. the set of communication lines the signals of which are jointly processed, is rather critical for achieving good crosstalk mitigation performances. Ideally, the vectoring group contains lines that form part of the same binder or bundle, but a vectoring group may also contain lines that belong to two or more different binders.

A cross-wired line is defined as a line belonging to a given vectoring group, but of whom its lines members do not coexist with it in the same physical binder. In fact, this is a line which was badly wired in the wrong vectoring group by the DSL operator. Techniques have been proposed for identifying these lines diagnosed as cross-wired. However, the known technique require a service interruption of the suspected cross-wired line. Moreover, only the identification is not sufficient, because as long as these cross-wired lines are not rewired in the right vectoring groups, they continue to generate an alien crosstalk which will impact the lines belonging the same physical binder. If there are more than two vectoring groups, then it is not clear which group the cross-wired line should be rewired to.

Also, after a large scale deployment of the vectoring technology in the field, it appeared that it exist some CPE modems which are compatible with vectoring but where the vectoring or the crosstalk cancellation mechanism doesn't work correctly. This can impact the diagnosis of cross-wired lines.

SUMMARY

It is thus an object of embodiments of the present invention to propose methods and devices for determining a corrective operation for a Digital Subscriber Line, which do not show the inherent shortcomings of the prior art.

Accordingly, embodiments relate to a method for for determining a corrective operation for a monitored Digital Subscriber Line in a first vectoring group, executed by a monitoring device, comprising:

- receiving measurement data representative of successive received signal qualities of the monitored Digital Subscriber Line at successive times, and of successive transmission activities of other Digital Subscriber Lines, wherein said other Digital Subscriber Lines include at least one first Digital Subscriber Line in said first vectoring group and at least one second Digital Subscriber Line in a second vectoring group,
- determining a corrective operation for the monitored Digital Subscriber Line in function of changes in said received signal qualities between times wherein the transmission activity of at least one of said other Digital Subscriber Lines changes.

Correspondingly, embodiments relate to a monitoring device for determining a corrective operation for a monitored Digital Subscriber Line in a first vectoring group, comprising:

- means for receiving measurement data representative of successive received signal qualities of the monitored Digital Subscriber Line at successive times, and of successive transmission activities of other Digital Subscriber Lines, wherein said other Digital Subscriber Lines include at least one first Digital Subscriber Line in said first vectoring group and at least one second Digital Subscriber Line in a second vectoring group,
- means for determining a corrective operation for the monitored Digital Subscriber Line in function of changes in said received signal qualities between times wherein the transmission activity of at least one of said other Digital Subscriber Lines changes.

In some embodiments, said successive received signal qualities include successive bitrates of the monitored Digital Subscriber Line and/or said successive transmission activities include respective activity indicators specifying whether said other Digital Subscriber Lines are active or not.

Determining a corrective operation may comprise:

- for each vectoring group, after a join or leave event of a Digital Subscriber Line in said vectoring group, determining a difference between the bitrate of the monitored Digital Subscriber Line and a reference bitrate,

- determining said corrective operation by comparing the maximum differences of the respective vectoring groups.

Determining a corrective operation may comprise:

- determining successive noise-to-signal ratios of the monitored Digital Subscriber Line, in function of the successive bitrates,
- for a plurality of said other Digital Subscriber Lines, determining a noise effect of the other Digital Subscriber Line on the monitored Digital Subscriber Line by:
- identifying two successive times between which the activity indicator of at least one Digital Subscriber Line changed, and
- determining a difference between the noise-to-signal ratio of the monitored Digital Subscriber Line between the identified successive times,
- determining said corrective operation in function of the determined noise effects.

In some embodiments, the method comprises sending a request for temporarily deactivation of one of said other Digital Subscriber Lines.

In some embodiments, the successive received signal qualities include successive per-carrier Signal-to-Noise Ratio of the monitored Digital Subscriber Line and/or the successive transmission activities include per-carrier transmit power levels.

Determining a corrective operation may comprise:

- determining successive per-carrier normalized received interference level in function of said per-carrier Signal-to-Noise Ratio and said per-carrier transmit power levels,
- for a plurality of said other Digital Subscriber Lines, determining a per-carrier crosstalk strength of the other Digital Subscriber Line on the monitored Digital Subscriber Line by:

    - identifying two successive times between which the transmit power levels of one carrier of one Digital Subscriber Line changed, and
    - determining a difference between the per-carrier normalized received interference levels at the identified successive times,

- determining aggregate crosstalk strengths for a plurality of said other Digital Subscriber lines in function of the determined per-carrier crosstalk strengths, and
- determining said corrective operation in function of the determined aggregate crosstalk strengths.

Determining a corrective operation may comprise determining a correct vectoring group for rewiring the monitored Digital Subscriber Line and/or determining an ordered list of vectoring groups for rewiring the monitored Digital Subscriber Line and/or identifying a malfunctioning user node.

Embodiments also relate to a computer program comprising instructions for performing the method mentioned before when said instructions are executed by a computer.

BRIEF DESCRIPTION OF THE DRAWINGS

The above and other objects and features of the invention will become more apparent and the invention itself will be best understood by referring to the following description of embodiments taken in conjunction with the accompanying drawings wherein:

    Figure 1 is a bloc diagram of a telecommunication network,
    Figures 2 to 4 are flowcharts of methods for determining a corrective operation for a Digital Subscriber Line, according to various embodiments, and
    Figure 5 is structural view of a monitoring device for determining a corrective operation for a Digital Subscriber Line.

DESCRIPTION OF EMBODIMENTS

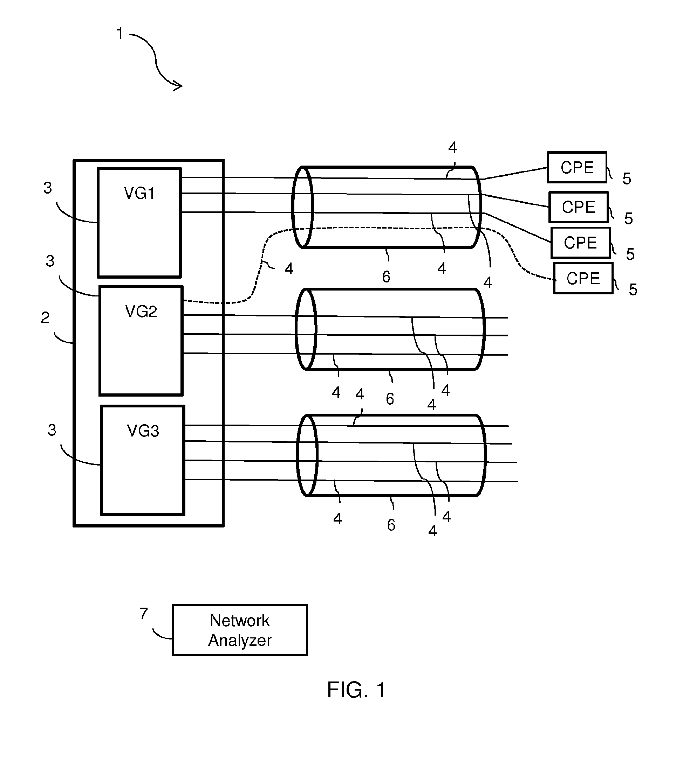

Figure 1 is a bloc diagram of a telecommunication network 1. The telecommunication network 1 comprises an access node 2 connected to user nodes 5 by respective Digital Subscriber Lines 4, and a monitoring device 7. The Digital Subscriber Lines 4 are grouped in respective binders 6. Not all user nodes 5 are showed for simplicity.

The access node 2 and the user nodes 5 use a Digital Subscriber Line (DSL) technology with a crosstalk cancellation mechanism, for example VDSL2 and vectoring, for communication over the Digital Subscriber Lines 4. For example, the access node 2 is or comprises a DSLAM and a user node 5 is a customer premises equipment (CPE) including a DSL modem.

Vectoring comprises jointly-processing a plurality of lines together in a vectoring group 3. In the example of Figure 1, the access node 2 comprises three vectoring groups 3, denoted VG1, VG2 and VG3. The vectoring group VG3 illustrates an ideal situation, wherein the Digital Subscriber Lines 4 of the vectoring group VG3 match the Digital Subscriber Lines 4 of a binder 6. In contrast, the vectoring groups VG1 and VG2 illustrate a cross-wired line, shown in dashed line. The cross-wired line belongs to the vectoring group VG2 but is located in the same binder 6 as the Digital Subscriber Lines 4 of the vectoring group VG1. Accordingly, the cross-talk from the cross-wired line into the other Digital Subscriber Lines 4 of the vectoring group VG1 is not correctly cancelled. Likewise, the crosstalk from the other Digital Subscriber Lines 4 of the vectoring group VG1 into the cross-wired line is not correctly cancelled. Moreover, processing the signals of the cross-wired line in vectoring group VG2 is unnecessary.

In case of Board Level Vectoring, a vectoring group 3 may only include Digital Subscriber Lines 4 connected to the same line card. Thus, a corrective operation for a cross-wired line may require re-wiring the cross-wired line to the correct line card. In case of System Level Vectoring, re-wiring of a cross-wired line may also be required, for example in the case of an access node 2 comprising more than one DSLAM.

The monitoring device 7 may obtain operational parameters relating to the functioning of the access node 2, the vectoring groups 3, the Digital Subscriber Lines 4 and/or the user nodes 5. For example, the access node 2 and/or the user nodes 5 send operational parameters to the monitoring device 7 on a regular basis or in response to a request. Based on the obtained operational parameters, the monitoring device 7 determines a corrective operation for a monitored Digital Subscriber Line 4. The corrective operation may include re-wiring a cross-wired Digital Subscriber Line 4 to the correct vectoring group 3, or replacing a defective user node 5. Various embodiments for determining the corrective operation are described hereafter.

The monitoring device 7 may be a network analyzer which, in addition to the determination of corrective operations, performs other monitoring, troubleshooting and management tasks related to the access node 2, the vectoring groups 3, the Digital Subscriber Lines 4 and/or the user nodes 5.

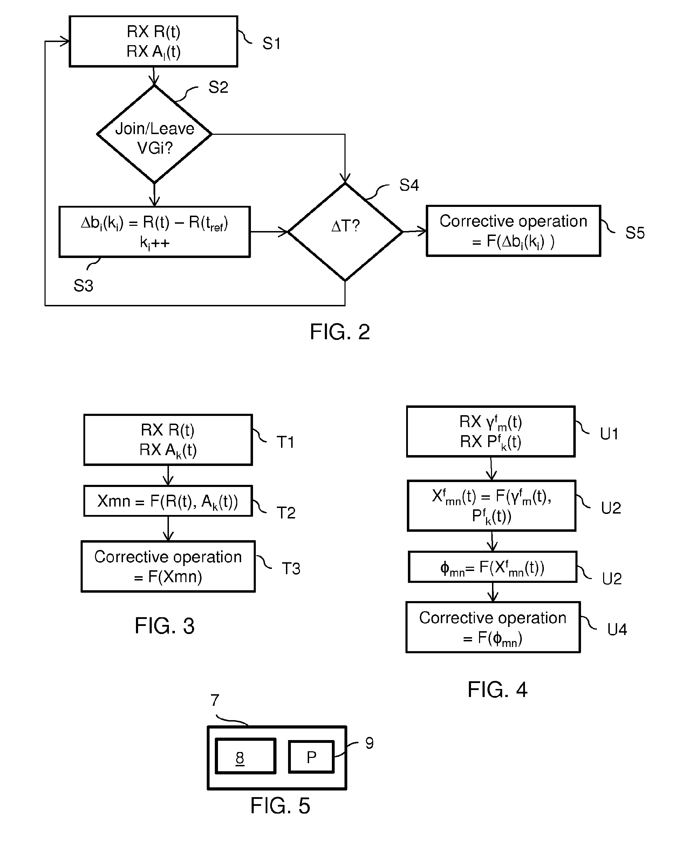

**Figure 2** is a flowchart of a method for determining a corrective operation for a monitored Digital Subscriber Line 4, according to a first embodiment. The monitored Digital Subscriber Line 4 may be a previously identified suspected cross-wired line.

During a monitoring period $\Delta T$, at successive times t, the monitoring device 7 obtains data representative of the bitrate R(t) of the monitored Digital Subscriber Line 4 and of the transmission activities of the other Digital Subscriber Lines 4 (Step S1).

The bitrate R(t) may be an attainable bitrate of the monitored Digital Subscriber Line 4, or a Full Cancelation bitrate of the monitored Digital Subscriber Line 4, defined as the bitrate of the DSL line whose only internal cross-talk has been cancelled. Techniques have been proposed for determining these bitrates without requiring a service interruption.

The transmission activities may include for example activity indicators $A_l(t)$, which may take two values for specifying whether line l is active at time t or not. An activity indicator $A_l(t)$ may change of value between two successive times t, and this is indicative of a join or leave event of the line l. A join or leave event of the line l typically corresponds to the user node 5 connected to line l being turned on or off.

Then, for each vectoring group VGi, the monitoring device 7 determines whether a join or leave event occurred since the last time t, in function of the received transmission activities (step S2).

If a join or leave event occurred for the line l of the vectoring group VGi, then the monitoring device 7 determines the following metric (step S3):

$$\Delta b_i(k_i) = R(t) - R(t_{ref})$$

wherein i refers to the vectoring group VGi, $k_i$ is a counter for the vectoring group VGi, which is incremented at step S3, and $t_{ref}$ is a reference time. In an embodiment, the reference time $t_{ref}$ is a time when all the Digital Subscriber Lines 4 of all the vectoring groups 3 were in showtime. This situation can be impossible to be reached if the DSL operator has a lot of vectoring groups, so in another embodiment, $t_{ref}$ is the last time when all the lines of the vectoring group VGi were in showtime, even if other lines of other vectoring groups are not in showtime. In both cases, $R(t_{ref})$ is a reference bitrate.

Then, after step S2 if no join or leave event occurred or after step S3 if a join or leave event occurred, the monitoring device 7 determines whether the monitoring period $\Delta T$ has ended (step S4). If the monitoring period has not ended, the monitoring continues at step S1. Accordingly, by repeating steps S1 to S4 for successive times t, the monitoring device 7 determines vectors $\Delta b_i$ for the respective vectoring groups VGi, wherein the values $\Delta b_i(k_i)$ are representative of a change of bitrate R(t) between times wherein the transmission activity of one Digital Subscriber Line 4 of the vectoring group VGi changed.

In contrast, if the monitoring period has ended, the monitoring device 7 determines a corrective operation for the monitored Digital Subscriber Line 4 in function of the vectors $\Delta b_i$ (step S5).

First, for each vectoring group VGi, the monitoring device 7 orders the element of the vector $\Delta b_i$ from the maximum to the minimum.

Then, the monitoring device 7 compares the first elements $\Delta b_i(1)$ (which is the maximum) of all vectoring groups VGi. The vectoring groups 3 which have the maximum among the first elements are selected, and the others are eliminated. If the number of selected vectoring groups 3 is more than one, the monitoring device 7 removes the first element of $\Delta b_i$ and the second element $\Delta b_i(2)$ becomes the new maximum. This process is repeated until we obtain only one selected group. The detected cross-wired line is recommended to be rewired to this selected vectoring group 3.

In an embodiment, the monitoring device 7 associates probabilities to a plurality of selected vectoring groups 3. For example, at the first iteration two vectoring groups 3 are selected. Then, 50% of probability is associated to each of them. At the second iteration, the first vectoring group 3 is selected alone. Then, 75% of probability is given to the first vectoring group, and 25 % to the second one. At the end, instead of selecting one vectoring group 3, the monitoring device 7 provides a list of candidates associated to a probability. This is equivalent to an ordered list of vectoring groups. Therefore, the advantage is if after rewiring the cross-wired line to the vectoring group 3 with the highest probability and the cross-wired line is detected again, the operator can retry to rewire the cross-wired line to the vectoring group listed in the second position. The rewiring can be redone until the cross-wired is not detected at all.

In some embodiments, the monitoring device 7 determines that the user node 5 of the monitored Digital Subscriber Line 4 should be replaced. For example, a bad CPE modem is detected if the candidates groups have the same probabilities at the last iteration or all of them have a low probability. Indeed, the DSL operators are interested to differentiate between the lines connected to a bad vectoring CPE modem, and an actual cross-wired line. Therefore, they can identify some categories of bad CPE modems and therefore advice to replace them.

**Figure 3** is a flowchart of a method for determining a corrective operation for a monitored Digital Subscriber Line 4, according to a second embodiment. The monitored Digital Subscriber Line 4 may be a previously identified suspected cross-wired line.

During a monitoring period $\Delta T$, at successive times t, the monitoring device 7 obtains data representative of the bitrate R(t) of the monitored Digital Subscriber Line 4 and of the transmission activities of the other Digital Subscriber Lines 4 (Step T1). Similarly to the embodiment described with reference to Figure 2, the bitrate R(t) may be an attainable bitrate or a Full Cancelation bitrate of the monitored Digital Subscriber Line 4, and the transmission activities may include for activity indicators $A_k(t)$, which may take two values for specifying whether line k is active at time t or not.

Then, for some of the Digital Subscriber Lines 4, the monitoring device 7 determines the noise effect Xmn of the line n on the monitored line m (Step T2). The noise effects Xmn can be determined for example as follows:

The monitoring device 7 look for pairs times, say (t-1,t), at which the set of active lines only differs by one. This may be called a simple joining or leaving event. Without loss of generality, let's say it is a leaving event, so that $A_n[t-1] = 1$ and $A_n[t] = 0$ for exactly one line n, while the monitored line m is active ($A_m[t-1] = A_m[t] = 1$) and all other lines are unchanged ($A_k[t-1]=A_k[t]$).

Based on an "average bitloading" analysis, it is possible to translate rates to a sort of average NSR value. In particular, with $b = R/(Nf_s)$ and $b = \log_2(1+1/(\Gamma \eta))$, with N the number of tones, fs the symbol rate, $\Gamma$ a gap parameter, and $\eta$ a nominal noise-to-signal (NSR) ratio, the monitoring device 7 can map the all the attainable rates R[t] to nominal NSR values $\eta[t]$.

The NSR can be modeled at a given point in time as a sum of noise contributions from all the active lines, plus a constant, background term $Y_m$:

$$\eta_m[t] = \sum_k X_{mk} A_k[t] + Y_m$$

Here $X_{mk}$ is the noise effect of line k on the monitored line m.

At a leaving event with $A_n[t-1]=1$ and $A_n[t] = 0$, with $A_k[t-1]=A_k[t]$ for all other k, we can estimate $X_{mn}$ from the difference

$$\hat{X}_{mn} = \eta_m[t-1] - \eta_m[t]$$

For a joining event, the difference terms are reversed:

$$\hat{X}_{mn} = \eta_m[t] - \eta_m[t-1]$$

As the line is monitored and more joining and leaving events are observed, the monitoring device 7 can build up estimates of more and more terms $X_{mk}$. Most will be close to zero, but in a cross-wired situation, or a situation with a bad CPE, some may be large. If there are multiple joining or leaving events for the same line n, we may get different estimates of $X_{mn}$ at different times. This is due to noise as well as inaccuracies in the model. These can be handled by averaging different estimates together.

Note that the values $X_{mn}$ can be mapped back to rates $R_{mn}$, to give an estimate of the rate that would be obtained on the monitored line m if only lines m and n were active.

In an alternative version of step T2, the monitoring device 7 estimates information from multi-line joining and leaving events. For example, if two lines n and p leave in a given interval (t-1,t), then by taking the difference of nominal NSR values, the monitoring device 7 obtains an estimate of Xmn+Xmp. Or, if line q activates in the same interval, then the difference gives an estimate of Xmn+Xmp-Xmq. In this way, the monitoring device 7 can build up a system of linear equations for the variables {Xmk}. To obtain final estimates of the individual variables {Xmk}, the monitoring device 7 can find the least squares solution to these linear equations, subject to the constraint that Xmk > 0 for all k. This version of step T2 will be especially useful when the monitoring interval is less frequent, so that multiple events are more likely to happen in the same interval.

Steps T1 and T2 are shown as two successive steps on Figure 3. However, they may be executed in parallel, with the noise effect Xmn for more and more lines n being determined as more and more data R(t) and $A_k(t)$ is collected.

Then, the monitoring device 7 determines a corrective operation for the monitored line m, in function of the determined noise effects Xmn (Step T3). As more and more Xmn values are determined, a picture may start to emerge:

- if there are large values of $X_{mn}$ (small values of $R_{mn}$) for one of more lines n in the same vectoring group as m, then this can be an indication that vectoring is not working well. For example due to a faulty CPE.
- if there are large values of $X_{mn}$ (small values of $R_{mn}$) for lines n in only one vectoring group g, and that vectoring group is different from that of line m, then we can say that line m should be rewired into vectoring group g.
- If there are large values of $X_{mn}$ (small values of $R_{mn}$) for lines n in more than one vectoring group, this may indicate a situation in which more complex rewiring may be required.

In determining which rates Rmn are considered to be large or small, they can be compared with predetermined values, for example the full_cancellation rate (defined as above) and the FEXT_free rate (defined as the bitrate of a DSL line of which all internal and alien crosstalk have been cancelled). A large rate is close to FEXT_free, and a small rate is close to full_cancellation.

In an embodiment, the monitoring device 7 monitors more than one monitored line m. For example, depending on the available resources, the monitoring device 7 monitors all of the Digital Subscriber Lines 7 and therefore obtains the rate R(t) for all the lines. In this case, information can be learned faster. In particular, the monitoring device can determine $X_{km}$ for many lines k when one of the monitored line m joins or leaves. A large value of $X_{km}$ has similar meaning as a large value of $X_{mk}$, as far as indicating that lines m and k should be in the same vectoring group.

In the embodiments described above, the determination of metrics (values $\Delta b_i(k_i)$ or noise effect Xmn) relies on join or leave events. In an embodiment, if sufficient join or leave events do not occur naturally, the monitoring device 7 can send a request for a line to go down and come back after some time, in order to obtain the data needed for determining the corresponding metrics.

**Figure 4** is a flowchart of a method for determining a corrective operation for a monitored Digital Subscriber Line 4, according to a third embodiment. The monitored Digital Subscriber Line 4 may be a previously identified suspected cross-wired line.

During a monitoring period, at successive times t, the monitoring device 7 obtains data representative of the per-carrier Signal-to-Noise Ratio (SNR) of the monitored Digital Subscriber Line 4, denoted $\gamma_m^f(t)$ where m refers to the monitored line and f to the tone/frequency, and of the transmission activities of the monitored Digital Subscriber Lines 4 and of the other Digital Subscriber Lines 4 (Step U1). In this embodiment, the transmission activities are the per-carrier information about the transmit power levels, denoted $P_k^f(t)$.

Then, the monitoring device 7 determines estimates of the per-carrier cross-talk strength $\hat{X}_{mn}^f(t)$ between the monitored line m and a line n, for a plurality of other lines n, in function of the obtained Signal-to-Noise Ratio $\gamma_m^f(t)$ and transmit power levels $P_k^f(t)$ (Step U2). This can be done as follows:

The SNR report on tone f of line m at time t can be modeled as:

$$\gamma_m^f[t] = \frac{P_m^f[t]}{\sum_k X_{mk}^f P_k^f[t] + Y_m^f}$$

where $P_k^f[t]$ is the transmit power, $X_{mk}^f$ is a normalized crosstalk strength, and $Y_m^f$ is a background noise level. Power is defined to be zero if a line is not active.

From the data obtained at step U1, namely the SNR of the monitored line m $\gamma_m^f[t]$ for many tones f and times t, and the per-carrier power levels $P_k^f[t]$ for the same set of times, and all lines k, the monitoring device 7 determines the normalized received interference level $z_m^f(t)$, defined as:

$$z_m^f[t] = \frac{P_m^f[t]}{\gamma_m^f[t]} = \sum_k X_{mk}^f P_k^f[t] + Y_m^f$$

This is analogous to the nsr values $\eta_m[t]$ used in the embodiment of Figure 3.

Within the data, the monitoring device 7 searches for a frequency f and pair of times (t-1,t) such that exactly one line, say line n, changed power from time t-1 to time t at this frequency. That is, we should have $P_k^f[t] = P_k^f[t-1]$ for all $k \neq n$, and $P_n^f[t] \neq P_n^f[t-1]$.

In this case, the monitoring device 7 can estimate the crosstalk strength $X_{mn}^f$ as:

$$\hat{X}_{mn}^f[t] = \left[ \frac{z_m^f[t] - z_m^f[t-1]}{P_n^f[t] - P_n^f[t-1]} \right]^+ , \text{ where the op-}$$

erator $[]^+$ ensures that the estimate is never smaller than zero.

In this way, the monitoring device 7 will determine various estimates of the crosstalk strength between the monitored line m and various other lines n, on various frequencies f and at different times t. The variable t in the notation $\hat{X}_{mn}^{f}[t]$ is to represent that the monitoring device 7 obtains different estimates at different times, even though the quantity $X_{mn}^{f}$ itself is assumed not to vary with time.

Then, the monitoring device 7 determines the crosstalk coupling $\phi_{mn}$ between the monitored line m and the line n, for a plurality of other lines n, in function of the per-carrier cross-talk strengths $\hat{X}_{mn}^{f}(t)$ (Step U3). This can be done by aggregating over tones f and times t as follows:

A standard model for crosstalk strength says that crosstalk strength (magnitude squared) is proportional to frequency squared, which means that the normalized coupling quantity $\Psi_{mn}^{f} := f^{-2} X_{mn}^{f}$ should not depend strongly on f.

The monitoring device 7 can therefore determine the strength of crosstalk coupling between line m and line n as a weighted average individual estimates:

$$\Phi_{mn} = \sum_{f,t} w_f[t] \hat{\Psi}_{mn}^{f}[t] = \sum_{f,t} w_f[t] f^{-2} \hat{X}_{mn}^{f}[t]$$

The procedure for choosing weights $w_f[t]$ is described next.

To obtain accurate estimates as quickly as possible, and to have a measure of how reliable the estimates are at any given stage, the monitoring device 7 uses minimum variance combining. With minimum variance combining, the monitoring device 7 combines different estimates of the same quantity with weights in such a way that the combined estimate is unbiased and has a variance that is as small as possible. To do this, the monitoring device 7 uses an estimate of the variance of the individual estimates.

In this embodiment, the initial data are SNR measurements $\gamma_m^{f}[t]$. These measurements are typically supposed to have a certain fixed accuracy on a dB scale, which corresponds to a relative accuracy on the linear scale. Thus, we can assume that the initial SNR measurements or the derived measurements $z_m^{f}[t]$ (expressed on a linear scale) have variance proportional to the value of the measurement itself; that is the variance of $z_m^{f}[t]$ is approximately $z_m^{f}[t]\sigma^2$ for some constant $\sigma^2$. If SNR measurements in dB have a small standard deviation of $\nu$, then one can show that in linear scale this translates to a relative standard deviation of $\sigma = \nu \ln(10)/10$. For example, a SNR standard deviation of $\nu = 0.5$ dB corresponds to a linear scale relative standard

deviation of about $\sigma = 0.12$.

Looking back to how the normalized estimates $\hat{\Psi}_{mn}^{f}[t]$ are derived from measurements $z_m^{f}[t]$, we can calculate that the variance of an estimate $\hat{\Psi}_{mn}^{f}[t]$ should be approximately

$$V_{mn}^{f}[t] := \frac{\left(z_m^{f}[t]\right)^2 + \left(z_m^{f}[t-1]\right)^2}{f^4 \left(P_n^{f}[t] - P_n^{f}[t-1]\right)^2} \sigma^2$$

Note in particular that estimates are more reliable when there is a large difference in power, $P_n^{f}[t] - P_n^{f}[t-1]$.

Using the principle of minimum variance combining, the weights should be inversely proportional to the variance, and should sum to one. Hence for computing $\Phi_{mn}$, the monitoring device 7 may use weights

$$w_f[t] = \frac{(V_{mn}^{f}[t])^{-1}}{\sum_{g,s} \left(V_{mn}^{g}[s]\right)^{-1}}.$$ Note that the value of the constant $\sigma^2$ does not affect the weights.

The variance of the combined estimate $\Phi_{mn}$ using this technique has an explicit formula, namely

$$V_{mn} = \left( \sum_{g,s} \left(V_{mn}^{g}[s]\right)^{-1} \right)^{-1}.$$

Steps U1 to U3 are showed as successive steps. However, they may be executed in parallel. Accordingly, as information is collected over time, crosstalk coupling estimates $\Phi_{mn}$ become more accurate and the variance $V_{mn}$ decreases. An estimate can be considered to be reliable if $\Phi_{mn}$ is significantly larger than the standard deviation $(V_{mn})^{1/2}$.

Finally, the monitoring device 7 determines a corrective operation for the monitored line m in function of the determined crosstalk couplings $\Phi_{mn}$ (Step U4). For example, reliable estimates of crosstalk coupling $\Phi_{mn}$ can then be used in a similar way to the noise effects Xmn of the embodiment of Figure 3, to determine which vectoring group line m should be wired to or to detect a bad CPE.

In DSL systems, the transmit power is usually fairly constant in showtime, but it may go up or down in a range of about 5 dB due to fine-gain adjustment. In the embodiment of Figure 4, the monitoring device 7 takes advantage of these fluctuations. It is not necessary to rely on join or leave events.

In the various embodiments described above, the monitoring device 7 obtains measurement data representative of successive received signal qualities of the monitored Digital Subscriber Line at successive times t : the rate R(t) or the SNR $\gamma_m^{f}(t)$, which can both be regarded as representing the signal quality of the monitored line. The monitoring device 7 also obtains measurement data representative of successive transmission activities of other Digital Subscriber Lines : Activity indicator $A_k(t)$ or power levels $P_k^f(t)$.

Then, after determining some intermediate results based on changes in signal qualities related to changes in transmission activities (vectors $\Delta b_i$, noise effects Xmn or crosstalk couplings $\Phi_{mn}$), the monitoring device 7 can determine a corrective operation for the monitored Digital Subscriber Line.

For this, since the used data can be obtained without requiring a service interruption, the monitoring device 7 may rely only on passive collection of information. Moreover, in addition to determining a correct vectoring group for a cross-wired line, the monitoring device 7 can detect a malfunctioning CPE.

**Figure 5** is a structural view of the monitoring device 7, which comprises a processor 8 and a memory 9. The memory 9 stores a computer program P which, when executed by the processor 7, causes the monitoring device 7 to execute one of the methods described above.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

**Claims**

1. Method for determining a corrective operation for a monitored Digital Subscriber Line in a first vectoring group (3), executed by a monitoring device (7), comprising:

   - receiving (S1 ; T1 ; U1) measurement data representative of successive received signal qualities of the monitored Digital Subscriber Line at successive times, and of successive transmission activities of other Digital Subscriber Lines, wherein said other Digital Subscriber Lines include at least one first Digital Subscriber Line in said first vectoring group (3) and at least one second Digital Subscriber Line in a second vectoring group (3),
   - determining (S2, S3, S4, S5; T2, T3; U2, U3, U4) a corrective operation for the monitored Digital Subscriber Line in function of changes in said received signal qualities between times wherein the transmission activity of at least one of said other Digital Subscriber Lines changes.

2. Method according to claim 1, wherein said successive received signal qualities include successive bitrates $(R(t))$ of the monitored Digital Subscriber Line.

3. Method according to claim 1 or 2, wherein said successive transmission activities include respective activity indicators $(A_l(t), A_k(t))$ specifying whether said other Digital Subscriber Lines are active or not.

4. Method according to claim 2 and 3, wherein determining a corrective operation comprises:

   - for each vectoring group, after detecting a join or leave event of a Digital Subscriber Line in said vectoring group (S2), determining (S3) a difference between the bitrate of the monitored Digital Subscriber Line and a reference bitrate,
   - determining (S5) said corrective operation by comparing the maximum differences of the respective vectoring groups.

5. Method according to claim 2 and 3, wherein determining a corrective operation comprises:

- determining successive noise-to-signal ratios of the monitored Digital Subscriber Line, in function of the successive bitrates,
- for a plurality of said other Digital Subscriber Lines, determining (T2) a noise effect (Xmn) of the other Digital Subscriber Line on the monitored Digital Subscriber Line by:
- identifying two successive times between which the activity indicator of at least one Digital Subscriber Line changed, and
- determining a difference between the noise-to-signal ratio of the monitored Digital Subscriber Line between the identified successive times,
- determining (T3) said corrective operation in function of the determined noise effects.

6. Method according to one of claims 3 to 5, comprising sending a request for temporarily deactivation of one of said other Digital Subscriber Lines.

7. Method according to claim 1, wherein said successive received signal qualities include successive per-carrier Signal-to-Noise Ratio $\left( \gamma_m^f(t) \right)$ of the monitored Digital Subscriber Line.

8. Method according to claim 1 or 7, wherein said successive transmission activities include per-carrier transmit power levels $\left( P_k^f(t) \right)$.

9. Method according to claims 7 and 8, wherein determining a corrective operation comprises:

- determining successive per-carrier normalized received interference level in function of said per-carrier Signal-to-Noise Ratio and said per-carrier transmit power levels,
- for a plurality of said other Digital Subscriber Lines, determining (U2) a per-carrier crosstalk strength $\left( X_{mn}^f(t) \right)$ of the other Digital Subscriber Line on the monitored Digital Subscriber Line by:
- identifying two successive times between which the transmit power levels of one carrier of one Digital Subscriber Line changed, and
- determining a difference between the per-carrier normalized received interference levels at the identified successive times,
- determining (U3) aggregate crosstalk strengths ($\Phi_{mn}$) for a plurality of said other Digital Subscriber lines in function of the determined per-carrier crosstalk strengths, and
- determining (U4) said corrective operation in function of the determined aggregate crosstalk strengths ($\Phi_{mn}$).

10. Method according to one of claims 1 to 9, wherein determining a corrective operation comprises determining a correct vectoring group for rewiring the monitored Digital Subscriber Line.

11. Method according to one of claims 1 to 9, wherein determining a corrective operation comprises determining an ordered list of vectoring groups for rewiring the monitored Digital Subscriber Line.

12. Method according to one of claims 1 to 11, wherein determining a corrective operation comprises identifying a malfunctioning user node.

13. Computer program (P) comprising instructions for performing the method of one of claims 1 to 12 when said instructions are executed by a computer.

14. Monitoring device (7) for determining a corrective operation for a monitored Digital Subscriber Line (4) in a first vectoring group (3), comprising:

- means (8, 9, P) for receiving measurement data representative of successive received signal qualities of the monitored Digital Subscriber Line at successive times, and of successive transmission activities of other Digital Subscriber Lines, wherein said other Digital Subscriber Lines include at least one first Digital Subscriber Line in said first vectoring group and at least one second Digital Subscriber Line in a second vectoring group,
- means (8, 9, P) for determining a corrective operation for the monitored Digital Subscriber Line in function of changes in said received signal qualities between times wherein the transmission activity of at least one of said other Digital Subscriber Lines changes.

**Amended claims in accordance with Rule 137(2) EPC.**

1. Method for determining a corrective operation for a monitored Digital Subscriber Line in a first vectoring group (3), executed by a monitoring device (7), comprising:

- receiving (S1; T1; U1) measurement data representative of successive received signal qualities of the monitored Digital Subscriber Line at successive times, and of successive transmission activities of other Digital Subscriber Lines, wherein said other Digital Subscriber Lines include at least one first Digital Subscriber Line in said first vectoring group (3) and at least one second Digital Subscriber Line in a second vectoring group (3),

**characterized in that** is comprises:

- determining (S2, S3, S4, S5; T2, T3; U2, U3, U4) a corrective operation for the monitored Digital Subscriber Line in function of changes in said received signal qualities between times wherein the transmission activity of at least one of said other Digital Subscriber Lines changes, wherein determining a corrective operation comprises at least one of determining a correct vectoring group for rewiring the monitored Digital Subscriber Line, determining an ordered list of vectoring groups for rewiring the monitored Digital Subscriber Line, and identifying a malfunctioning user node.

2. Method according to claim 1, wherein said successive received signal qualities include successive bitrates (R(t)) of the monitored Digital Subscriber Line.

3. Method according to claim 1 or 2, wherein said successive transmission activities include respective activity indicators ($A_l(t)$, $A_k(t)$) specifying whether said other Digital Subscriber Lines are active or not.

4. Method according to claim 2 and 3, wherein determining a corrective operation comprises:

- for each vectoring group, affer detecting a join or leave event of a Digital Subscriber Line in said vectoring group (S2), determining (S3) a difference between the bitrate of the monitored Digital Subscriber Line and a reference bitrate,
- determining (S5) said corrective operation by comparing the maximum differences of the respective vectoring groups.

5. Method according to claim 2 and 3, wherein determining a corrective operation comprises:

- determining successive noise-to-signal ratios of the monitored Digital Subscriber Line, in function of the successive bitrates,
- for a plurality of said other Digital Subscriber Lines, determining (T2) a noise effect (Xmn) of the other Digital Subscriber Line on the monitored Digital Subscriber Line by:

- identifying two successive times between which the activity indicator of at least one Digital Subscriber Line changed, and
- determining a difference between the noise-to-signal ratio of the monitored Digital Subscriber Line between the identified successive times,

- determining (T3) said corrective operation in function of the determined noise effects.

6. Method according to one of claims 3 to 5, comprising sending a request for temporarily deactivation of one of said other Digital Subscriber Lines.

7. Method according to claim 1, wherein said successive received signal qualities include successive per-carrier Signal-to-Noise Ratio $\left( \gamma_m^f(t) \right)$ of the monitored Digital Subscriber Line.

8. Method according to claim 1 or 7, wherein said successive transmission activities include per-carrier transmit power levels $\left( P_k^f(t) \right)$.

9. Method according to claims 7 and 8, wherein determining a corrective operation comprises:

- determining successive per-carrier normalized received interference level in function of said per-carrier Signal-to-Noise Ratio and said per-carrier transmit power levels,
- for a plurality of said other Digital Subscriber Lines, determining (U2) a per-carrier crosstalk strength $\left( X_{mn}^f(t) \right)$ of the other Digital Subscriber Line on the monitored Digital Subscriber Line by:

- identifying two successive times between which the transmit power levels of one carrier of one Digital Subscriber Line changed, and
- determining a difference between the per-carrier normalized received interference levels at the identified successive times,

- determining (U3) aggregate crosstalk strengths ($\Phi_{mn}$) for a plurality of said other Digital Subscriber lines in function of the determined per-carrier crosstalk strengths, and
- determining (U4) said corrective operation in function of the determined aggregate crosstalk strengths ($\Phi_{mn}$).

10. Computer program (P) comprising instructions for performing the method of one of claims 1 to 9 when said instructions are executed by a computer.

11. Monitoring device (7) for determining a corrective operation for a monitored Digital Subscriber Line (4) in a first vectoring group (3), comprising:

- means (8, 9, P) for receiving measurement data representative of successive received signal qualities of the monitored Digital Subscriber Line at successive times, and of successive transmission activities of other Digital Subscriber Lines, wherein said other Digital Subscriber Lines include at least one first Digital Subscriber Line in said first vectoring group and at least one second Digital Subscriber Line in a second vectoring group,

**characterized in that** is comprises:

- means (8, 9, P) for determining a corrective operation for the monitored Digital Subscriber Line in function of changes in said received signal qualities between times wherein the transmission activity of at least one of said other Digital Subscriber Lines changes, wherein determining a corrective operation comprises at least one of determining a correct vectoring group for rewiring the monitored Digital Subscriber Line, determining an ordered list of vectoring groups for rewiring the monitored Digital Subscriber Line, and identifying a malfunctioning user node.

FIG. 1

RX R(t)
RX $A_l$(t) — S1

S2

Join/Leave
VGi?

$\Delta b_i(k_i) = R(t) - R(t_{ref})$
$k_i$++

S3

$\Delta T$? — S4

Corrective operation
$= F(\Delta b_i(k_i)\,)$ — S5

**FIG. 2**

RX R(t)
RX $A_k$(t) — T1

Xmn = F(R(t), $A_k$(t)) — T2

Corrective operation
= F(Xmn) — T3

**FIG. 3**

RX $\gamma^f_m$(t)
RX $P^f_k$(t) — U1

$X^f_{mn}(t) = F(\gamma^f_m(t), P^f_k(t))$ — U2

$\phi_{mn} = F(X^f_{mn}(t))$ — U2

Corrective operation
$= F(\phi_{mn})$ — U4

**FIG. 4**

7

8    P — 9

**FIG. 5**

Europäisches
Patentamt

European
Patent Office

Office européen
des brevets

## EUROPEAN SEARCH REPORT

**Application Number**

EP 15 30 5764

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 704 331 A1 (ALCATEL LUCENT [FR]) 5 March 2014 (2014-03-05) * abstract * * paragraphs [0032] - [0046], [0058] - [0059] * | 1-14 | INV. H04B3/32 H04L12/28 ADD. H04M11/06 |
| A | WO 2013/141840 A1 (ADAPTIVE SPECTRUM & SIGNAL [US]; KERPEZ KENNETH [US]; MOHSENI MEHDI [U) 26 September 2013 (2013-09-26) * abstract; figure 2a * * paragraphs [0062] - [0112] * | 1-14 | |
| A | WO 2015/028545 A1 (LANTIQ DEUTSCHLAND GMBH [DE]) 5 March 2015 (2015-03-05) * page 7, line 4 - page 15, line 20 * | 1-14 | |
| A | "TR-197- DQS: DSL Quality Management Techniques and Nomenclature", , 22 August 2012 (2012-08-22), pages 1-61, XP055175052, Retrieved from the Internet: URL:http://www.broadband-forum.org/technical/download/TR-197.pdf [retrieved on 2015-03-10] * page 41, line 5 - page 45, line 23 * | 1-14 | |

**TECHNICAL FIELDS SEARCHED (IPC)**

H04B
H04L
H04M

The present search report has been drawn up for all claims

| Place of search | Date of completion of the search | Examiner |
|---|---|---|
| Munich | 11 November 2015 | Itani, Maged |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 5764

This annex lists the patent family members relating to the patent documents cited in the above-mentioned European search report.
The members are as contained in the European Patent Office EDP file on
The European Patent Office is in no way liable for these particulars which are merely given for the purpose of information.

11-11-2015

| Patent document cited in search report | | Publication date | Patent family member(s) | | Publication date |
|---|---|---|---|---|---|
| EP 2704331 | A1 | 05-03-2014 | CN | 104488198 A | 01-04-2015 |
| | | | EP | 2704331 A1 | 05-03-2014 |
| | | | US | 2015155914 A1 | 04-06-2015 |
| | | | WO | 2014032870 A1 | 06-03-2014 |
| WO 2013141840 | A1 | 26-09-2013 | AU | 2012374062 A1 | 09-10-2014 |
| | | | CA | 2867845 A1 | 26-09-2013 |
| | | | CN | 104247283 A | 24-12-2014 |
| | | | EP | 2828977 A1 | 28-01-2015 |
| | | | JP | 2015514352 A | 18-05-2015 |
| | | | US | 2015071336 A1 | 12-03-2015 |
| | | | US | 2015288811 A1 | 08-10-2015 |
| | | | WO | 2013141840 A1 | 26-09-2013 |
| WO 2015028545 | A1 | 05-03-2015 | NONE | | |

EPO FORM P0459

For more details about this annex : see Official Journal of the European Patent Office, No. 12/82